# EUROPEAN PATENT SPECIFICATION

(11) **EP 3 220 249 B1**
(45) Date of publication and mention of the grant of the patent: **08.05.2019**
(21) Application number: 15877536.1
(22) Date of filing: 10.06.2015
(51) Int. Cl.: G06F 3/0484, G06F 9/44, G06F 9/455

(54) **METHOD, DEVICE AND TERMINAL FOR IMPLEMENTING REGIONAL SCREEN CAPTURE**
VERFAHREN, VORRICHTUNG UND ENDGERÄT ZUR IMPLEMENTIERUNG REGIONALER BILDSCHIRMERFASSUNG
PROCÉDÉ, DISPOSITIF ET TERMINAL POUR METTRE EN OEUVRE UNE CAPTURE D'ÉCRAN RÉGIONALE

(30) Priority: 15.01.2015 CN 201510020623
(43) Date of publication of application: 20.09.2017
(73) Proprietor: ZTE Corporation, Shenzhen, Guangdong 518057 (CN)
(72) Inventor: YAO, Junying, Shenzhen Guangdong 518057 (CN)
(74) Representative: CMS Cameron McKenna Nabarro Olswang LLP
(86) International application number: PCT/CN2015/081172
(87) International publication number: WO 2016/112619

(56) References cited:
- CN-A- 102 177 515
- CN-A- 103 092 520
- CN-A- 103 092 524
- CN-A- 103 257 879
- US-A1- 2011 221 766
- Anonymous: "How to capture screenshot only the specific element? Selenium WebDriver - Google Discussiegroepen", , 4 April 2014 (2014-04-04), XP055416778, Retrieved from the Internet: URL:https://groups.google.com/forum/#!msg/ selenium-users/7wHF0nGuOV0/VkiajSgIrNUJ [retrieved on 2017-10-18]
- Sravan Medarapu ET AL: "Re: How to capture screenshot only the specific element? Selenium WebDriver", groups.google.com/forum/print/msg/selenium -users, 4 April 2014 (2014-04-04), XP055416790, Retrieved from the Internet: URL:https://groups.google.com/forum/print/ msg/selenium-users/7wHF0nGuOV0/VkiajSgIrNU J?ctz=4100373_48_52_123900_48_436380 [retrieved on 2017-10-18]
- Mir Fawad: "Xtreme Shot: Capture Entire Screen, Selected Region & App UI Elements", Addictive Tips, 23 November 2011 (2011-11-23), XP55524563, Retrieved from the Internet: URL:https://www.addictivetips.com/windows- tips/xtreme-shot-capture-entire-screen-sel ected-region-app-ui-elements/ [retrieved on 2018-11-16]

## Description

### Technical Field

The document relates to a technology for implementing regional screen capture for a smart terminal, particularly to a method, device, and terminal for implementing regional screen capture.

### Background

With the continuous development of terminal technology and the popularity of intelligent mobile terminals, such as smart phones, the application software on the intelligent terminal becomes more and more. In the usage process of the application software, the screen capture function is inevitable to be used by the user. At present, the full-screen capture function of the screen is realized by the intelligent terminal on the market, and when the user only needs a screen capture for a partial region, the user needs to manually cut on the captured full screen to select the capture content. This manner is not only slow to achieve, and but also requires the user to manually operate and adjust, therefore the user experience is poor.

The document "Anonymous: How to capture screenshot only the specific element? Selenium WebDriver-Google Discussiegroepen, 4 April 2014 (2014-04-04)" discusses How to capture screenshot only the specific element.

The document "Mir Fawad: "Xtreme Shot: Capture Entire Screen, Selected Region & App UI Elements", Addictive Tips, 23 November 2011 (2011-11-23), XP55524563, Retrieved from the Internet:URL:https:// www.addictivetips.com/windows-tips/xtreme-shot-capture-entire-screen-selected-region-app-ui-elements/" mentions capturing multiple UI elements, for example, drop down menus, toolbars, file menus etc.

### Summary

The technical problem is solved by a method according to claim 1, a device according to claim 6 for implementing regional screen capture, by which the screen capture for one or more regions is implemented simply, rapidly and accurately, thereby improving the user experience. The improvements and embodiments are provided in the dependent claims.

Also provided is a method for implementing regional screen capture including:
capturing a full content of a current screen interface according to a screen capture instruction and generating a picture;
parsing layout information of the current screen interface, and marking a control in the picture by using the acquired layout information;
selecting one or more controls required to be captured according to a mark; and
determining a capture region according to the selected control/controls, and capturing a content displayed on the capture region.

In an exemplary embodiment, the step of parsing layout information of the current screen interface includes:
acquiring a layout file of the current screen interface through a function interface;
parsing the layout file, and acquiring coordinate position information of each control.

In an exemplary embodiment, the step of marking a control in the picture by using the acquired layout information includes:
determining a boundary position of each control on the screen according to the coordinate position information respectively; and
along the determined boundary position, marking parsed boundary of each control in the picture in a preset delimitation manner.

In an exemplary embodiment, the boundary position of each control on the screen refers to a border of a rectangular region determined by values of an X coordinate and a Y coordinate of an upper left corner of the control and values of an X coordinate and a Y coordinate of a lower right corner of the control.

In an exemplary embodiment, the method further includes: buffering information about all controls of which boundaries were marked in a memory by a manner of a control tree.

In an exemplary embodiment, the step of along the determined boundary position, marking parsed boundary of each control in the picture in a preset delimitation manner includes:
for a control which is located at an outermost layer as a root node in the control tree, not marking;
for a control of which a width and height are less than a preset threshold, using the control as a part of a parent control of the control, that is, an attached child control, not marking.

In an exemplary embodiment, the step of selecting one or more controls required to be captured according to a mark includes:
when one parent control is selected, the attached child control of the parent control is also selected;
when one parent control is selected, a non-attached child control of the parent control is not selected, herein the non-attached child control of the parent control refers to a child control that is marked with a boundary in the parent control.

In an exemplary embodiment, the step of capturing the content displayed on one or more determined capture regions includes:
retaining the content of the capture region, and retaining a picture pixel value of the capture region unchanged at the same time; displaying a picture of an unselected region as a black or white, or displaying the picture of the unselected region picture as other set background color.

In an exemplary embodiment, the method further includes: performing the step of selecting again on the capture region to cancel the capture region.

Also provided is a device for implementing regional screen capture including a first processing module and a second processing module.

The first processing module is configured to receive a screen capture instruction, capture a full content of a current screen interface and generate a picture; parse layout information of the current screen interface, and output the parsed layout information and the picture information to the second processing module.

The second processing module is configured to mark a control in the picture by using the acquired layout information; receive a selection instruction, and select one or more controls required to be captured according to a mark; determine a capture region according to the selected control/controls, and capture the content displayed on the capture regions.

In an exemplary embodiment, the first processing module is configured to parse layout information of the current screen interface in the following manner: acquiring a layout file of the current screen interface through a function interface; parsing the layout file, and acquiring coordinate position information of each control.

In an exemplary embodiment, the second processing module is configured to mark a control in the picture by using the acquired layout information in the following manner: determining a boundary position of each control on the screen according to the coordinate position information respectively; along the determined boundary position, marking parsed boundary of each control in the picture in a preset delimitation manner.

In an exemplary embodiment, the boundary position of each control on the screen refers to a border of a rectangular region determined by values of an X coordinate and a Y coordinate of an upper left corner of the control and values of an X coordinate and a Y coordinate of a lower right corner of the control.

In an exemplary embodiment, the second processing module is configured to buffer information about all controls of which the boundaries were marked in a memory by a manner of a control tree.

In an exemplary embodiment, the second processing module is configured to along the determined boundary position, mark parsed boundary of each control in the picture in a preset delimitation manner in the following manner:
for a control which is located at the outermost layer as a root node in the control tree, not marking;
for a control of which a width and height are less than a preset threshold, using the control as a part of a parent control of the control, that is, an attached child control, not marking.

In an exemplary embodiment, the second processing module is configured to select one or more controls required to be captured according to a mark in the following manner:
when one parent control is selected, an attached child control of the parent control is also selected;
when one parent control is selected, a non-attached child control of the parent control is not selected, herein the non-attached child control of the parent control refers to a child control that is marked with a boundary in the parent control.

In an exemplary embodiment, the second processing module is configured to capture the content displayed on one or more determined capture regions in the following manner:
receiving the selection instruction, retaining the content of the capture region, and retaining a picture pixel value of the capture region unchanged at the same time; displaying a picture of an unselected region as a black or white or other set background color.

In an exemplary embodiment, the second processing module is further configured to,
when receiving an instruction of performing the selection again on the capture region, cancel the selection for the capture region.

A terminal including a display screen and a processor is provided.

The processor is configured to capture a full content of a current screen interface according to a screen capture instruction and generate a picture; parse layout information of the current screen interface; and mark a control in the picture by using the acquired layout information; select one or more controls required to be captured according to a mark; determine a capture region according to the selected control, and capture a content displayed on the capture region.
the display screen is configured to display the captured content.

Compared with the existing art, the technical scheme of the present application includes: capturing a full content of a current screen interface according to a screen capture instruction and generating a picture; parsing layout information of the control of the current screen interface, and marking each control on the generated picture by using the acquired control layout information; determining a capture region according to a control selected based on a mark, capturing the content displayed on one or more determined capture regions. By means of the technical scheme provided by the present invention, the screen capture for one or more regions is implemented simply, rapidly and accurately, thereby improving the user experience.

Other features and advantages of the present invention are described in the following description, and become obvious in part from the description, or are understood by implementing the present invention. The purpose and other advantages of the present invention can be implemented and acquired by the structure which is specified in the description, claims and accompanying drawings.

### Brief Description of Drawings

The accompanying drawings described herein are used to provide a further understanding for the present invention, and constitute a part of the present application. Exemplary embodiments of the present invention and the description thereof are used to explain the present invention, and do not constitute an improper limit on the present invention. In the accompanying drawings:
FIG. 1 is a flow chart of a method for implementing regional screen capture in an embodiment of the present invention.
FIG. 2 is a schematic diagram of an embodiment for displaying control layout information on a mobile terminal screen in the present invention.
FIG. 3 is a schematic diagram of an embodiment for marking a control on a mobile terminal screen in the present invention.
FIG. 4 is a schematic diagram of an embodiment for selecting a control in the present invention.
FIG. 5 is a schematic diagram of a result of the screen capture according to the selection shown in FIG. 4 in the present invention.
FIG. 6 is a schematic diagram of another embodiment for selecting a control in the present invention.
FIG. 7 is a schematic diagram of an intermediate result of the screen capture according to the selection shown in FIG. 6 in the present invention.
FIG. 8 is a schematic diagram of a result of the screen capture according to the selection shown in FIG. 6 in the present invention.
FIG. 9 is a schematic diagram of canceling a selected control region in an embodiment of the present invention.
FIG. 10 is a schematic diagram of a structure of a device for implementing regional screen capture in an embodiment of the present invention.

### Detailed Description

Hereinafter, in conjunction with the accompanying drawings, embodiments of the present invention will be described in detail. It should be illustrated that, under the situation of no conflict, the embodiments and the features in the embodiments in the present application can be freely combined with each other. Embodiments that are not comprised in the claimed subject matter, are not part of the invention.

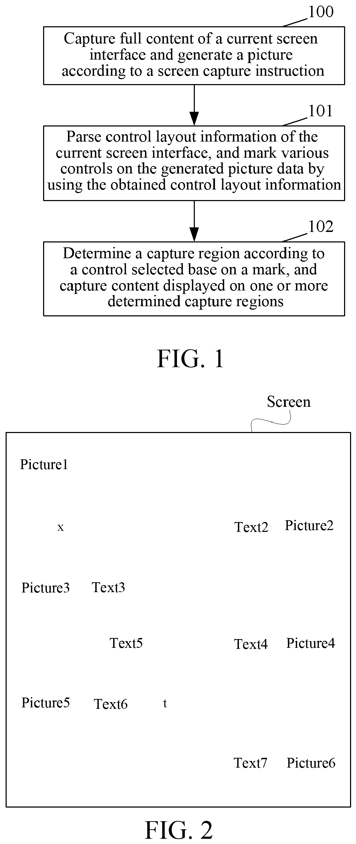

FIG. 1 is a flow chart of a method for implementing regional screen capture in an embodiment of the present invention. As shown in FIG. 1, the method includes steps 100-101.

In step 100, a full content of a current screen interface is captured and a picture is generated according to a screen capture instruction.

In the step, when a mobile terminal receives a screen capture instruction, it means that a screen capture is required. Herein, the screen capture instruction may be implemented by the operation on a key combination of physical hot keys preset by the system or user, for example, pressing the key combination at the same time: volume + and volume - keys. Or, the screen capture instruction may also be implemented by a preset multi-point touch gesture track, for example, the user performs a sliding screen operation of a preset pattern on the screen.

How to capture the full content of the current screen interface and generate a picture in the step belongs to the common technical means of the people skilled in the art, and its specific implementation is not used to limit the protection scope of the present invention, and will not be repeated here.

In step 101, layout information of the current screen interface is parsed, and various controls are marked in the generated picture by using the acquired layout information.

Herein, the layout information refers to the information about how to lay out the controls on the screen interface.

Herein, the control, also known as widget, is a graphical user interface element, and the displayed information arrangement of the control may be changed by the user, such as, a window (including a picture, etc.), or a text box (including character information, etc.). The characteristic of the definition of a control is to provide a separate interaction point for direct manipulation of given data.

The present step specifically includes the following operations.

At first, a layout file of the current screen interface is acquired through a function interface. For example, an intelligent terminal based on the Android platform may acquire the layout file through the dump Window Hierarchy interface or acquire the layout file through the UiAuomator dump instruction. Herein, the layout file contains the layout information of various controls of the current interface, including the location coordinates, the size and so on. Terms known by those skilled in the art will not be repeated here.

Next, the acquired layout file is parsed to acquire the coordinate position of each control since the layout file contains the layout information of various controls of the current interface and the layout information includes the coordinate, the size and the content of the included text, of the control. By reading the coordinate position field in the file, the coordinate position of each control can be acquired.

Then, according to the parsed coordinate positions of each control, the boundary position of each control on the screen is determined respectively and displayed in the picture by the way of preview on the screen of the intelligent terminal. Herein, the boundary position of each control on the screen refers to a border of a rectangular region determined by values of an X coordinate and a Y coordinate of an upper left corner of the control and values of an X coordinate and a Y coordinate of a lower right corner of the control.

FIG. 2 is a schematic diagram of an embodiment for displaying layout information on a mobile terminal screen in the present invention. As shown in FIG. 2, a plurality of pictures and texts are displayed on the intelligent terminal screen, including picture 1, picture 2, picture 3, picture 4, picture 5, picture 6, text 1, text 2, text 3, text 4, text 5, text 6, text 7. In addition, text x and text t which occupy very small areas are also included on the screen. In the layout information, the location information (such as, X coordinate, Y coordinate), boundary information, and text content included in all the controls of the current interface are stored. For example, the coordinate position of the control is bounds="[66,407] [456,444]", which represents values of the X coordinate and Y coordinate of the upper left corner of the control are 66, 407 respectively, and values of the X coordinate and Y coordinate of the lower right corner of the control are 456, 444 respectively. A rectangular region can be drawn according to the position of the two coordinates, and the border of the rectangular is the boundary of the control.

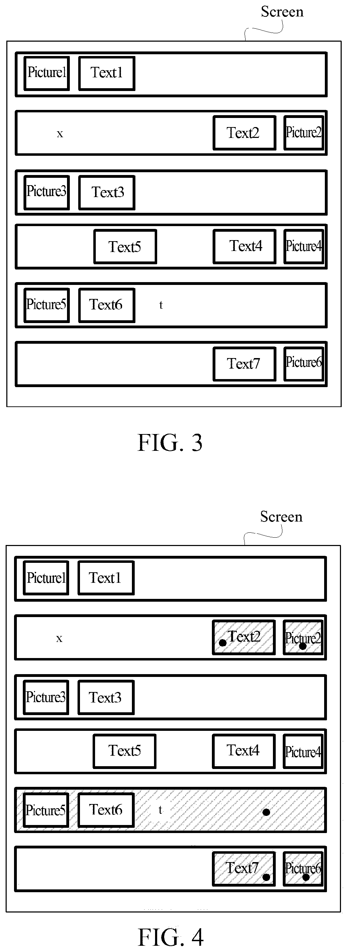

Finally, along the determined boundary position of the control, the parsed boundaries of various controls in the generated picture are marked in a preset delimitation manner so that the user can clearly recognize the position of each control and the content included by each control. That is, in the picture of the preview interface, the parsed boundaries of the various controls are marked in a preset delimitation manner, such as bold lines, preset colors, and the like. FIG. 3 is a schematic diagram of an embodiment for marking a control on a mobile terminal screen in the present invention. As shown in FIG. 3, various pictures and texts on the screen are in the form of a control, and the boundaries of various controls are marked by an example of bold lines to form a number of rectangular boxes. Herein, some of the control borders themselves will be surrounded by a larger external control border, so in this case, the external control and internal control is in a relationship of father and son, that is, the external control is the parent control, such as, the long rectangular box outside the picture 1, text 1, and the internal control is the child controls such as, picture 1, text 1. In particular, when some of the controls on the screen themselves occupy smaller areas, for example, if the width and the height are less than a preset threshold, such as, 100 pixels, the boundary of the control will not be marked separately, and such control is considered as an attached child control, which attaches to the parent control of its region, such as, the text x in FIG. 3 is attached to the parent control to which the text 2 and picture 2 belongs, and text t is attached to the parent control to which the text 6 and picture 5 belongs.

After the boundaries of all controls that conform to the markup rule are marked, the step further includes: information about all controls of which boundaries were marked is recorded, for example, information about all controls of which boundaries were marked is stored in a memory by a manner of a control tree. The specific implementation belongs to the common technical means of the people skilled in the art, and will not be repeated here.

It should be noted that, when the boundary of the control is marked, a control located at the outermost layer in the control tree, which is used as the root node, is generally represented as the most peripheral border of the screen, so its boundary is not marked; and for the width and height are less than a preset threshold, such as, a control with 100-pixels, it represents that the control occupies a small area on the screen, so the control is used as a part of the parent control of the control and used as an attached child control, and its boundary is not marked. When the parent control is selected, the attached child control of the parent control is also selected. It needs to be noted that other child control in the parent control that is marked with boundary is non-attached child control of the parent control. When the parent control is selected, the non-attached subspace is not be selected together.

In step 102, one or more controls required to be captured is/are selected according to a mark, and a capture region is determined according to the selected control/controls, and the content displayed on the determined capture region is captured.

Herein, the capture region is the region determined by all the selected controls, such as, when two buttons are selected, then the region occupied by the two buttons on the screen is the capture region.

In this step, the user may select one or more controls required to be captured by clicking or sliding or the like. Determining the capture region is only to find out which regions are required to be retained, and not to perform a capture action. Capturing the determined region in the following is exactly to perform the screen capture action, to acquire a picture.

Capturing the content displayed on one or more determined capture regions in the step includes: retaining the content of the capture region, and retaining a picture pixel value of the capture region unchanged at the same time; displaying a picture of an unselected region as a black or white or other set background color.

The control on the screen has location information, such as, the upper left corner and the lower right corner have the coordinates, which means that a rectangular position is determined, and the rectangular position is the capture region. With reference to FIG. 3, the border of each rectangle is the boundary of a control, that is, a rectangular region determined by the control, is the capture region.

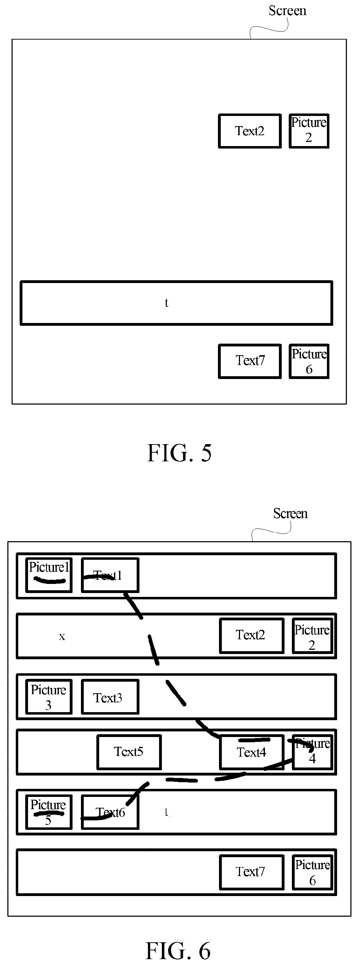

FIG. 4 is a schematic diagram of an embodiment for selecting a control in the present invention. As shown in FIG. 4, it is assumed that the user selects a control in the region required to be captured by the action of clicking on the picture of the preview interface, and as shown in FIG. 4, the black dot represents the position clicked by the user, and the region where the control is located is shown in the shaded portion with the oblique lines within the control boundary in FIG. 4. FIG. 5 is a schematic diagram of a result of the screen capture according to the selection shown in FIG. 4 in the present invention. As shown in FIG. 5, the screen capture result of the region at which the clicked control on the screen is located is retained on the screen, according to the selected plurality of control regions clicked by the user in FIG. 4, and the picture pixel value of the selected region may be retained unchanged at the same time, and a picture of the unselected region displays black or white or other set background color, and the color is set to 0 in FIG. 5, that is, taking white for displaying as an example. It should be noted that the control boundary shown in FIG. 5 may be deleted.

FIG. 6 is a schematic diagram of another embodiment for selecting a control in the present invention. As shown in FIG. 6, it is assumed that the user selects a control of the region requires to be captured by making an action of arbitrarily sliding to draw lines in the picture of the preview interface, the region in which each control is selected for each coordinate is determined according to all coordinates on the track. The gesture sliding track is as shown by the heavy dotted line in FIG. 6, and all the coordinates on the track line are recorded, and all the coordinates on the track lines may be considered as the coordinate positions clicked by the user.

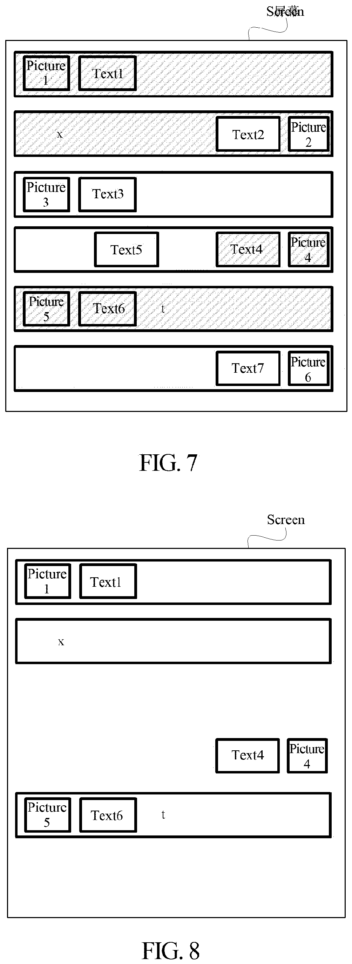

FIG. 7 is a schematic diagram of an intermediate result of the screen capture according to the selection shown in FIG. 6 in the present invention. As shown in FIG. 7, the region of the shaded portion with the oblique lines in FIG. 7 is a region of multiple controls determined by the sliding track according to the sliding track in FIG. 6. FIG. 8 is a schematic diagram of a result of the screen capture according to the selection shown in FIG. 6 in the present invention. As shown in FIG. 8, the control region of all the regions which are not set to be the shaded portion with the oblique lines in FIG. 7, that is, the control region which does not include the track lines in FIG. 6 is set to display the background color, and only the content of the selected region containing the track lines in FIG. 6 is retained. It should be noted that the control boundary shown in FIG. 8 may be deleted.

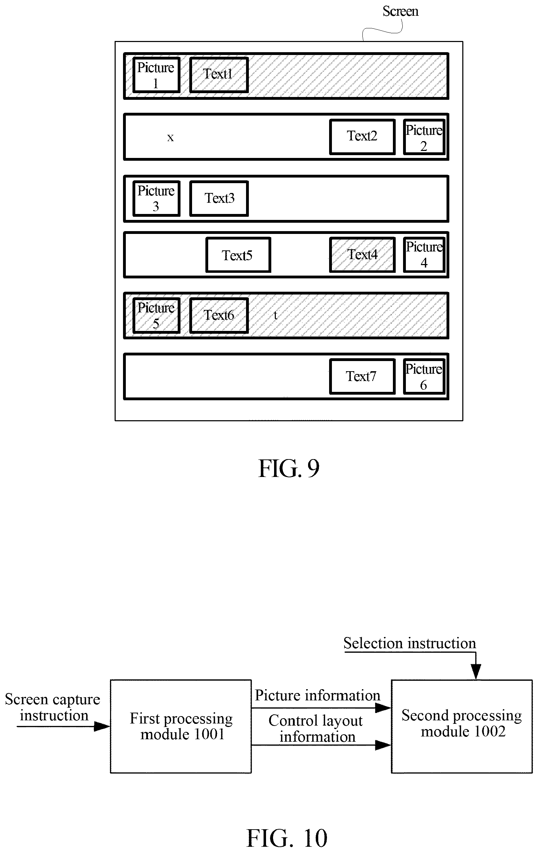

In an exemplary embodiment, as shown in FIG. 7, the region of the shaded portion with the oblique lines, such as, the picture 1, the text 1, the text x, the text 4, the picture 4, the picture 5, the text 5, and the text t have been selected as the region to be captured. In this case, if the user needs to cancel any part of the selected region, the above-mentioned selected operation such as clicking or sliding may be performed again for the corresponding region. For example, clicking the picture 1, the picture 4, the text x again, the background color of these control regions is set to the original color, which means that these regions are currently not selected as the regions to be captured, and the displaying result is shown in FIG. 9. FIG. 9 is a schematic diagram of an embodiment for canceling the selected control region in the present invention. As shown in FIG. 9, the selected region is still represented by retaining the shadow with oblique lines.

In an exemplary embodiment, when the user does not select any control, all content of the entire screen interface is saved, which is equivalent to capture the full screen.

FIG. 10 is a schematic diagram of a structure of a device for implementing regional screen capture in an embodiment of the present invention. As shown in FIG. 10, the device at least includes a first processing module 1001 and a second processing module 1002.

The first processing module 1001 is configured to receive a screen capture instruction, capture a full content of a current screen interface and generate a picture; parse layout information of the current screen interface, and output the parsed layout information and picture information to the second processing module 1002.

The second processing module 1002 is configured to mark various controls in the generated picture by using the acquired layout information; receive the selection instruction, determine a capture region according to a control selected based on a mark, and use the content displayed on one or more determined capture region as the capture region.

Specifically, the first processing module 1001 is configured to receive a screen capture instruction, capture the full content of the current screen interface and generate picture data; acquire a layout file of the current screen interface through a function interface; parse the layout file to acquire coordinate position information of each control, and output the parsed layout information and the picture information to the second processing module 1002.

The second processing module 1002 is configured to determine a boundary position of each control on the screen according to the parsed coordinate position information respectively; along the determined boundary position of the control, mark the parsed boundary of each control in the picture in a preset delimitation manner; receive the selection instruction, retain the content of the screen capture region, and retain a picture pixel value of the screen capture region unchanged at the same time; display a picture of an unselected region as a black or white or other set background color.

The second processing module 1002 is further configured to save all content of the entire screen interface when a selection instruction is not received.

The second processing module 1002 is further configured to, when receiving the instruction of performing the selection again on the screen capture region, cancel the selection for the capture region.

The device of the embodiment of the present invention may be set in a terminal. The terminal at least includes a display screen and a processor.

The processor is configured to capture a full content of a current screen interface according to a screen capture instruction and generate a picture; parse layout information of the current screen interface, and mark various controls on the generated picture by using the acquired layout information; determine a capture region according to a control selected based on a mark, and capture the content displayed on one or more determined capture regions.

The display screen is configured to display the content of the capture region.

An embodiment of the present invention further discloses a computer program, including program instructions. When being executed by a computer, the computer can execute any abovementioned method for implementing regional screen capture.

An embodiment of the present invention further discloses a carrier carrying the computer program.

It can be understood by those skilled in the art that all or part of steps in the above-mentioned method can be fulfilled by a program instructing the relevant hardware components, and the program can be stored in a computer readable storage medium. During the execution of the program, the following steps are included: capturing a full content of a current screen interface according to a screen capture instruction and generating picture data for storing; parsing layout information of the current screen interface, and marking various controls on the generated picture data by using the acquired layout information; determining a capture region according to a control selected based on a mark, capturing the content displayed on one or more determined capture regions. The storage medium may be, such as: ROM/RAM, magnetic disk, optical disk, and the like.

The above description is only alternative embodiments of the present invention, and is not intended to limit the protection scope of the present invention. Any modifications, equivalent substitutions and improvements made within the essence and principle of the present invention should be included in the protection scope of the present invention.

### Industrial Applicability

By means of the technical scheme provided by the present invention, the screen capture for one or more regions is implemented simply, rapidly and accurately, thereby improving the user experience. Therefore, the present invention has very strong industrial applicability.

## Claims

1. A method for implementing regional screen capture, comprising:
capturing a full content of a current screen interface according to a screen capture instruction and generating a picture (S100);
acquiring a layout file of the current screen interface through a function interface, parsing the layout file, and acquiring coordinate position information of each control, and marking a control in the picture by using the acquired layout information (S101);
wherein, the step of marking a control in the picture by using the acquired layout information comprises:
determining a boundary position of each control on the screen according to the coordinate position information respectively; and
along the determined boundary position, marking parsed boundary of each control in the picture in a preset delimitation manner;
buffering information about all controls of which boundaries were marked in a memory by a manner of a control tree;
marking the parsed boundary of each control in the picture by bold lines or preset colors;
not marking a control which is located at an outermost layer as a root node in the control tree;
not marking an attached child control, wherein the attached child control is a control of which a width and height are less than a preset threshold and attaches to a parent control in a region where the attached child control is located;
receiving a selection instruction selecting one or more controls required to be captured according to a mark; and
determining a capture region according to the selected control/controls, and capturing a content displayed on the capture region (S102).

2. The method for implementing regional screen capture according to claim 1, wherein, the boundary position of each control on the screen refers to a border of a rectangular region determined by values of an X coordinate and a Y coordinate of an upper left corner of the control and values of an X coordinate and a Y coordinate of a lower right corner of the control.

3. The method for implementing regional screen capture according to claim 1, wherein the step of selecting one or more controls required to be captured according to a mark comprises:
when one parent control is selected, the attached child control of the parent control being also selected; and
when one parent control is selected, a non-attached child control of the parent control being not selected, wherein the non-attached child control of the parent control refers to a child control that is marked with a boundary in the parent control.

4. The method for implementing regional screen capture according to claim 1, wherein, the step of capturing the content displayed on one or more determined capture regions comprises:
retaining the content of the capture region, and retaining a picture pixel value of the capture region unchanged at the same time; displaying a picture of an unselected region as a black or white, or displaying the picture of the unselected region as other set background color.

5. The method for implementing regional screen capture according to any one of claims 1 to 4, further comprising: performing the step of selecting on the capture region again to cancel the capture region.

6. A device for implementing regional screen capture, comprising a first processing module (1001) and a second processing module (1002); wherein,
the first processing module (1001) is configured to receive a screen capture instruction, capture a full content of a current screen interface and generate a picture; parse layout information of the current screen interface, and output the parsed layout information and the picture information to the second processing module;
wherein, the first processing module (1001) is configured to parse layout information of the current screen interface in the following manner: acquiring a layout file of the current screen interface through a function interface; parsing the layout file, and acquiring coordinate position information of each control;
the second processing module (1002) is configured to mark a control in the picture by using the acquired layout information; receive a selection instruction, and select one or more controls required to be captured according to a mark; determine a capture region according to the selected control/controls, and capture the content displayed on the capture region;
wherein, the second processing module (1002) is configured to mark a control in the picture by using the acquired layout information in the following manner: determining a boundary position of each control on the screen according to the coordinate position information respectively; along the determined boundary position, marking parsed boundary of each control in the picture in a preset delimitation manner; wherein the second processing module (1002) is further configured to buffer information about all controls of which the boundaries were marked in a memory by a manner of a control tree;
the second processing module (1002) is configured to, along the determined boundary position, mark parsed boundary of each control in the picture in a preset delimitation manner in the following manner:
marking the parsed boundary of each control in the picture by bold lines or preset colors;
not marking a control which is located at an outermost layer as a root node in the control tree;
not marking an attached child control, wherein the attached child control is a control of which a width and height are less than a preset threshold and attaches to a parent control in a region where the attached child control is located.

7. The device for implementing regional screen capture according to claim 6, wherein, the boundary position of each control on the screen refers to a border of a rectangular region determined by values of an X coordinate and a Y coordinate of an upper left corner of the control and values of an X coordinate and a Y coordinate of a lower right corner of the control.

8. The device for implementing regional screen capture according to claim 6, wherein, the second processing module (1002) is configured to select one or more controls required to be captured according to a mark in the following manner:
when one parent control is selected, an attached child control of the parent control is also selected; and
when one parent control is selected, a non-attached child control of the parent control is not selected, wherein the non-attached child control of the parent control refers to a child control that is marked with a boundary in the parent control.

9. The device for implementing regional screen capture according to claim 6, wherein, the second processing module (1002) is configured to capture the content displayed on one or more determined capture regions in the following manner:
receiving the selection instruction, retaining the content of the capture region, and retaining a picture pixel value of the capture region unchanged at the same time; displaying a picture of an unselected region as a black or white or other set background color.

10. The device for implementing regional screen capture according to any one of claims 6 to 9, wherein, the second processing module is further configured to,
when receiving an instruction of performing the selection again on the capture region, cancel the selection for the capture region.

## Patentansprüche

1. Verfahren zum Implementieren einer regionalen Bildschirmaufnahme, Folgendes umfassend:
Aufnahme eines vollständigen Inhalts einer aktuellen Bildschirmschnittstelle gemäß einer Bildschirmaufnahmeanweisung und Erzeugen eines Bildes (S100);
Erfassen einer Layoutdatei der aktuellen Bildschirmschnittstelle über eine Funktionsschnittstelle, Parsen der Layoutdatei und Erfassen von Koordinatenpositions-Informationen jeder Steuerung und Markieren einer Steuerung im Bild unter Verwendung der erfassten Layoutinformationen (S101);
wobei der Schritt des Markierens einer Steuerung im Bild unter Verwendung der erfassten Layoutinformationen umfasst:
Bestimmen einer Begrenzungsposition jeder Steuerung auf dem Bildschirm gemäß den Koordinatenpositions-Informationen; und
entlang der bestimmten Begrenzungsposition, Markieren der analysierten Begrenzung jeder Steuerung im Bild in einer voreingestellten Abgrenzungsweise;
Puffern von Informationen über alle Steuerungen, von denen Begrenzungen in einem Speicher durch eine Art Baumstruktur markiert wurden;
Markieren der analysierten Begrenzung jeder Steuerung in dem Bild durch fette Linien oder voreingestellte Farben;
nicht Markieren einer Steuerung, die sich an einer äußersten Schicht befindet, als Stammknoten in der Baumstruktur;
nicht Markieren einer angehängten untergeordneten Steuerung, wobei die angehängte untergeordnete Steuerung eine Steuerung ist, deren Breite und Höhe kleiner als ein voreingestellter Schwellenwert ist und die an eine übergeordnete Steuerung in einem Bereich angehängt wird, in dem sich die angehängte untergeordnete Steuerung befindet;
Empfangen einer Auswahlanweisung, die eine oder mehrere Steuerungen auswählt, die gemäß einer Markierung aufgenommen werden müssen; und
Bestimmen eines Aufnahmebereichs gemäß der ausgewählten Steuerung/Steuerungen und Aufnahme eines Inhalts, der auf dem Aufnahmebereich (S102) angezeigt wird.

2. Verfahren zum Implementieren einer regionalen Bildschirmaufnahme nach Anspruch 1, wobei sich die Begrenzungsposition jeder Steuerung auf dem Bildschirm auf einen Rand eines rechteckigen Bereichs bezieht, der durch Werte einer X-Koordinate und einer Y-Koordinate einer linken oberen Ecke der Steuerung und Werte einer X-Koordinate und einer Y-Koordinate einer rechten unteren Ecke der Steuerung bestimmt wird.

3. Verfahren zum Implementieren einer regionalen Bildschirmaufnahme nach Anspruch 1, wobei der Schritt des Auswählens einer oder mehrerer Steuerungen, die gemäß einer Markierung aufgenommen werden müssen, Folgendes umfasst:
wenn eine übergeordnete Steuerung ausgewählt wird, wird auch die angehängte untergeordnete Steuerung der übergeordneten Steuerung ausgewählt; und
wenn eine übergeordnete Steuerung ausgewählt wird, wird eine nicht angehängte untergeordnete Steuerung der übergeordneten Steuerung nicht ausgewählt, wobei sich die nicht angehängte untergeordnete Steuerung der übergeordneten Steuerung auf eine untergeordnete Steuerung bezieht, die mit einer Grenze in der übergeordneten Steuerung markiert ist.

4. Verfahren zum Implementieren einer regionalen Bildschirmaufnahme nach Anspruch 1, wobei der Schritt der Aufnahme des Inhalts, der auf einem oder mehreren bestimmten Aufnahmebereichen angezeigt wird, Folgendes umfasst:
Beibehalten des Inhalts des Aufnahmebereichs und gleichzeitiges Beibehalten eines Bildpunktwerts des Aufnahmebereichs unverändert;
Anzeigen eines Bildes eines nicht ausgewählten Bereichs als schwarz oder weiß oder Anzeigen des Bildes des nicht ausgewählten Bereichs als andere eingestellte Hintergrundfarbe.

5. Verfahren zum Implementieren einer regionalen Bildschirmaufnahme nach einem der Ansprüche 1 bis 4, ferner umfassend:
Durchführen des Schrittes des erneuten Auswählens auf dem Aufnahmebereich, um den Aufnahmebereich aufzuheben.

6. Vorrichtung zum Implementieren einer regionalen Bildschirmaufnahme, umfassend ein erstes Verarbeitungsmodul (1001) und ein zweites Verarbeitungsmodul (1002);
wobei das erste Verarbeitungsmodul (1001) konfiguriert ist, um eine Bildschirmaufnahmeanweisung zu empfangen, einen vollständigen Inhalt einer aktuellen Bildschirmschnittstelle aufzunehmen und ein Bild zu erzeugen;
Layoutinformationen der aktuellen Bildschirmschnittstelle zu analysieren und die analysierten Layoutinformationen und die Bildinformationen an das zweite Verarbeitungsmodul auszugeben;
wobei das erste Verarbeitungsmodul (1001) konfiguriert ist, um Layoutinformationen der aktuellen Bildschirmschnittstelle auf die folgende Weise zu analysieren:
Erfassen einer Layoutdatei der aktuellen Bildschirmschnittstelle über eine Funktionsschnittstelle;
Analysieren der Layoutdatei und Erfassen von Koordinatenpositions-Informationen jeder Steuerung;
das zweite Verarbeitungsmodul (1002) ist konfiguriert, um eine Steuerung im Bild unter Verwendung der erfassten Layoutinformationen zu markieren;
Empfangen einer Auswahlanweisung und eine oder mehrere Steuerungen auswählen, die gemäß einer Markierung erfasst werden sollen;
Bestimmen eines Aufnahmebereichs gemäß der ausgewählten Steuerung/Steuerungen und den im Aufnahmebereich angezeigten Inhalt erfassen;
wobei das zweite Verarbeitungsmodul (1002) konfiguriert ist, um eine Steuerung in dem Bild durch Verwendung der erfassten Layoutinformationen auf die folgende Weise zu markieren:
Bestimmen einer Grenzposition jeder Steuerung auf dem Bildschirm gemäß den Koordinatenpositions-Informationen;
entlang der bestimmten Begrenzungsposition, Markieren der analysierten Begrenzung jeder Steuerung im Bild in einer voreingestellten Abgrenzungsweise;
wobei das zweite Verarbeitungsmodul (1002) ferner konfiguriert ist, Informationen über alle Steuerungen zu puffern, deren Grenzen in einem Speicher durch eine Weise einer Baumstruktur markiert wurden;
wobei das zweite Verarbeitungsmodul (1002) konfiguriert ist, um entlang der bestimmten Grenzposition analysierte Begrenzung jeder Steuerung im Bild in einer voreingestellten Begrenzungsart in der folgenden Weise zu markieren:
Markieren der analysierten Begrenzung jeder Steuerung in dem Bild durch fette Linien oder voreingestellte Farben;
nicht Markieren einer Steuerung, die sich an einer äußersten Schicht befindet, als Stammknoten in der Baumstruktur;
nicht Markieren einer angehängten untergeordneten Steuerung, wobei die angehängte untergeordnete Steuerung eine Steuerung ist, deren Breite und Höhe kleiner als ein voreingestellter Schwellenwert ist und die an eine übergeordnete Steuerung in einem Bereich, in dem sich die angehängte untergeordnete Steuerung befindet, angehängt wird.

7. Vorrichtung zum Implementieren einer regionalen Bildschirmaufnahme nach Anspruch 6, wobei sich die Begrenzungsposition jeder Steuerung auf dem Bildschirm auf einen Rand eines rechteckigen Bereichs bezieht, der durch Werte einer X-Koordinate und einer Y-Koordinate einer linken oberen Ecke der Steuerung und Werte einer X-Koordinate und einer Y-Koordinate einer rechten unteren Ecke der Steuerung bestimmt wird.

8. Vorrichtung zum Implementieren einer regionalen Bildschirmaufnahme nach Anspruch 6, wobei das zweite Verarbeitungsmodul (1002) konfiguriert ist, um eine oder mehrere Steuerungen auszuwählen, die gemäß einer Markierung auf die folgende Weise aufgenommen werden sollen:
wenn eine übergeordnete Steuerung ausgewählt wird, wird auch eine angehängte untergeordnete Steuerung der übergeordneten Steuerung ausgewählt; und
wenn eine übergeordnete Steuerung ausgewählt wird, wird eine nicht angehängte untergeordnete Steuerung der übergeordneten Steuerung nicht ausgewählt, wobei sich die nicht angehängte untergeordnete Steuerung der übergeordneten Steuerung auf eine untergeordnete Steuerung bezieht, die mit einer Grenze in der übergeordneten Steuerung markiert ist.

9. Vorrichtung zum Implementieren einer regionalen Bildschirmaufnahme nach Anspruch 6, wobei das zweite Verarbeitungsmodul (1002) konfiguriert ist, um den Inhalt, der auf einem oder mehreren bestimmten Aufnahmebereichen angezeigt wird, auf die folgende Weise zu erfassen:
Empfangen der Auswahlanweisung, Beibehalten des Inhalts des Aufnahmebereichs und gleichzeitiges Beibehalten eines Bildpunktwerts des Aufnahmebereichs unverändert;
Anzeigen eines Bildes eines nicht ausgewählten Bereichs als schwarzweiß oder eine andere eingestellte Hintergrundfarbe.

10. Vorrichtung zum Implementieren einer regionalen Bildschirmaufnahme nach einem der Ansprüche 6 bis 9, wobei das zweite Verarbeitungsmodul ferner konfiguriert ist, um beim Empfangen einer Anweisung, die Auswahl erneut auf dem Aufnahmebereich durchzuführen, die Auswahl für den Aufnahmebereich aufzuheben.

## Revendications

1. Procédé de réalisation d'une capture d'écran régionale, consistant à :
capturer le contenu entier d'une interface d'écran actuelle selon une instruction de capture d'écran et générer une image (S100) ;
obtenir un fichier de mise en page de l'interface d'écran actuelle par l'intermédiaire d'une interface de fonction, analyser le fichier de mise en page et obtenir les informations de coordonnées de position de chaque commande, et marquer une commande dans l'image en utilisant les informations de mise en page obtenues (S101) ;
dans lequel, l'étape de marquage d'une commande dans l'image en utilisant les informations de mise en page obtenues comprend :
la détermination d'une position limite de chaque commande sur l'écran en fonction des informations de coordonnées de position, respectivement ; et
le marquage de la limite analysée de chaque commande dans l'image le long de la position limite déterminée selon une délimitation prédéfinie ;
la mise en mémoire tampon des informations sur toutes les commandes dont les limites ont été marquées dans une mémoire à la manière d'une arborescence ;
le marquage de la limite analysée de chaque commande dans l'image par des lignes en gras ou des couleurs prédéfinies ;
le fait de ne pas marquer une commande située au niveau d'une couche extérieure en tant que noeud racine dans l'arborescence ;
le fait de ne pas marquer une commande fille annexe, la commande fille annexe étant une commande dont la largeur et la hauteur sont inférieures à un seuil prédéfini et se rattachant à une commande parent dans une zone où se trouve la commande fille annexe;
la réception d'une instruction de sélection sélectionnant une ou plusieurs commandes à capturer en fonction d'une marque ; et
la détermination d'une zone de capture en fonction de la commande/des commandes sélectionnée(s) et la capture d'un contenu affiché sur la zone de capture (S102).

2. Procédé de réalisation d'une capture d'écran régionale selon la revendication 1, dans lequel, la position limite de chaque commande sur l'écran concerne une limite d'une zone rectangulaire déterminée par des valeurs d'une coordonnée X et d'une coordonnée Y d'un angle supérieur gauche de la commande et des valeurs d'une coordonnée X et d'une coordonnée Y d'un angle inférieur droit de la commande.

3. Procédé de réalisation d'une capture d'écran régionale selon la revendication 1, dans lequel l'étape de sélection d'une ou de plusieurs commandes à capturer en fonction d'une marque comprend les phases suivantes :
lorsqu'une commande parent est sélectionnée, la commande fille annexe de la commande parent est également sélectionnée ; et
lorsqu'une commande parent est sélectionnée, toute commande fille non annexe de la commande parent n'est pas sélectionnée, la commande fille non annexe de la commande parent concernant une commande fille marquée par une limite dans la commande parent.

4. Procédé de réalisation d'une capture d'écran régionale selon la revendication 1, dans lequel, l'étape de capture du contenu affiché sur une ou plusieurs zones de capture déterminées comprend :
la conservation du contenu de la zone de capture et la conservation d'une valeur de pixel d'image de la zone de capture inchangée en même temps ;
l'affichage d'une image d'une zone non sélectionnée en tant qu'image noire ou blanche ou l'affichage de l'image de la zone non sélectionnée comme autre couleur d'arrière-plan définie.

5. Procédé de réalisation d'une capture d'écran régionale selon l'une des revendications 1 à 4, comprenant en outre :
la réalisation à nouveau de l'étape de sélection sur la zone de capture pour annuler la zone de capture.

6. Dispositif de réalisation d'une capture d'écran régionale, comprenant un premier module de traitement (1001) et un second module de traitement (1002) ;
dans lequel, le premier module de traitement (10001) est configuré pour recevoir une instruction de capture d'écran, capturer le contenu entier d'une interface d'écran actuelle et générer une image ;
analyser les informations de mise en page de l'interface d'écran actuelle et transmettre les informations de mise en page analysées et les informations d'image au second module de traitement ;
dans lequel, le premier module de traitement (1001) est configuré pour analyser les informations de mise en page de l'interface d'écran actuelle de la manière suivante :
l'obtention d'un fichier de mise en page de l'interface d'écran actuelle par l'intermédiaire d'une interface de fonction ;
l'analyse du fichier de mise en page et obtention des informations de coordonnées de position de chaque commande ;
le second module de traitement (1002) est configuré pour marquer une commande dans l'image en utilisant les informations de mise en page obtenues ;
la réception d'une instruction de sélection et sélection d'un ou de plusieurs commandes à capturer en fonction d'une marque ;
la détermination d'une zone de capture en fonction des commandes sélectionnées et capture du contenu affiché sur la zone de capture ;
dans lequel le second module de traitement (1002) est configuré pour marquer une commande dans l'image en utilisant les informations de mise en page obtenues, de la manière suivante :
la détermination d'une position limite de chaque commande sur l'écran en fonction des informations de coordonnées de position, respectivement ;
le marquage de la limite analysée de chaque commande dans l'image le long de la position limite déterminée selon une délimitation prédéfinie ;
dans lequel le second module de traitement (1002) est en outre configuré pour mettre en mémoire tampon des informations sur toutes les commandes dont les limites ont été marquées dans une mémoire à la manière d'une arborescence ;
le second module de traitement (1002) est configuré pour marquer, le long de la position limite déterminée, la limite analysée de chaque commande de l'image dans une délimitation prédéfinie de la manière suivante :
le marquage de la limite analysée de chaque commande dans l'image par des lignes en gras ou des couleurs prédéfinies ;
le fait de ne pas marquer une commande située au niveau d'une couche extérieure en tant que noeud racine dans l'arborescence ;
le fait de ne pas marquer une commande fille annexe, la commande fille annexe étant une commande dont la largeur et la hauteur sont inférieures à un seuil prédéfini et qui se rattache à une commande parent dans une zone où se trouve la commande fille annexe.

7. Dispositif de réalisation d'une capture d'écran zonale selon la revendication 6, dans lequel, la position limite de chaque commande sur l'écran concerne une limite d'une zone rectangulaire déterminée par des valeurs d'une coordonnée X et d'une coordonnée Y d'un angle supérieur gauche de la commande et des valeurs d'une coordonnée X et d'une coordonnée Y d'un angle inférieur droit de la commande.

8. Dispositif de réalisation d'une capture d'écran régionale selon la revendication 6, dans lequel le second module de traitement (1002) est configuré pour sélectionner une ou plusieurs commandes à capturer en fonction d'une marque de la manière suivante :
lorsqu'une commande parent est sélectionnée, une commande fille annexe de la commande parent est également sélectionnée ; et
lorsqu'une commande parent est sélectionnée, toute commande fille non annexe de la commande parent n'est pas sélectionnée, la commande fille non annexe de la commande parent concernant une commande fille marquée par une limite dans la commande parent.

9. Dispositif de réalisation d'une capture d'écran régionale selon la revendication 6, dans lequel le second module de traitement (1002) est configuré pour capturer le contenu affiché sur une ou plusieurs zones de capture déterminées de la manière suivante :
la réception de l'instruction de sélection, la conservation du contenu de la zone de capture et la conservation d'une valeur de pixel d'image de la zone de capture inchangée en même temps ;
l'affichage d'une image d'une zone non sélectionnée comme une image noire ou blanche ou comme autre couleur d'arrière-plan définie.

10. Dispositif de réalisation d'une capture d'écran régionale selon l'une des revendications 6 à 9, dans lequel, le second module de traitement est en outre configuré pour annuler la sélection pour la zone de capture lors de la réception d'une instruction concernant la réalisation à nouveau de la sélection sur la zone de capture.
